# EUROPEAN PATENT APPLICATION

(11) **EP 1 536 303 A2**
(43) Date of publication of application: **01.06.2005**
(21) Application number: 04027156.1
(22) Date of filing: 16.11.2004
(51) Int. Cl.: G05G 1/08, B60H 1/00

(54) **Operating element**

(30) Priority: 26.11.2003 DE 10355136
(71) Applicant: Valeo Klimasysteme GmbH, 96476 Rodach (DE)
(72) Inventor: Hentschel, Joachim, 96479 Weitramsdorf-Weidach (DE)
(74) Representative: Lemaire, Marc

(57) **Abstract**

Operating element, in particular for controlling a heating, ventilation and/or air conditioning system in a motor vehicle, which comprises at least two parts which can be moved relative to one another and have mutually facing surfaces, at least one of which is designed to be at least partially elastic.

## Description

The present invention relates to an operating element, in particular for controlling a heating, ventilation and/or air conditioning system in a motor vehicle. Such operating elements may be designed either as slide controls or as so-called rotary knobs.

An operating element comprises in particular two parts which can be moved relative to one another, said parts being made of a hard plastic/hard plastic or metal/hard plastic. One problem here is that, when the operating elements are actuated, running or sliding occurs on account of the materials used, and this firstly produces disruptive noise and secondly reduces the operating comfort, or else sliding means and/or lubricants have to be used to reduce these phenomena.

By way of example, DE 195 17 781 C1 describes an operating element for control devices in vehicles. The operating elements are used to control in particular mechanical and/or electrical functions in a motor vehicle. By way of example, in a heating, ventilation and/or air conditioning system the functions [lacuna] the fan speeds of a fan and the position of the various air valves in the air diffuser box, wherein in each case a separate rotary knob is provided for the mechanical and electrical components.

DE 195 17 781 C1 discloses an operating element comprising a housing, a rotary knob and a locking device for locking the operating element in predefined positions. The locking device comprises a one-piece locking slide, which is integrally formed on the housing, with a large number of locking depressions and a locking element which is made in one piece with a rotary axle of the operating knob and has two resilient plastic arms which project from the rotary axle. Of particular disadvantage here is the fact that undesirable noises, locking noises, are generated by the latching-in of the operating element and such a design is expensive and complicated.

In general, on account of manufacturing tolerances in conventional designs of operating elements, there is the problem of providing a certain prestress or a certain tolerance or play between a bearing running surface and a bearing element.

It is therefore an object of the invention to provide an operating element which can be operated more comfortably by the operating person in haptical terms. Moreover, the operating element should avoid or be able to attenuate disruptive and undesirable noises. Furthermore, the operating element should be able to provide tolerance compensation with respect to the components used.

According to the invention, this object is achieved by the features of the independent Patent Claim 1, with advantageous embodiments being described by the features of the dependent claims.

In particular there is proposed an operating element, in particular for controlling a heating, ventilation and/or air conditioning system in a motor vehicle, which comprises at least two parts which can be moved relative to one another and have mutually facing surfaces, at least one of which is designed to be at least partially elastic.

The operating element is in particular a rotary knob arrangement for controlling devices such as, for example, the fan speeds of a fan and the position of the various air valves in the air diffuser box.

By way of example, one of the parts of the operating element is a rotary knob. The other of the parts of the operating element is for example a bushing. By virtue of the advantageous elastic design according to the invention of at least one of the two parts that can be moved relative to one another, on the one hand friction noises and the like are attenuated or avoided and on the other hand manufacturing tolerances can be compensated since both parts can be pressed against one another and into one another without thereby adversely affecting the functionality.

On account of the elastic design according to the invention of at least one of the parts of the operating element and the elastic deformation of the elastic part that is thereby achieved, the two movable parts which are directly or indirectly in engagement provide a haptical operating feel and comfort that is perceived as particularly pleasant by the user. An operating element according to the invention can moreover be produced in a simple and cost-effective manner and on account of the deformability of the elastic part provides a certain degree of tolerance compensation. The invention can be used in particular on rotary knob arrangements but may also be used for slide controls or press switches.

Departing completely from what has been used in practice to date, the present invention thus proposes the use of an elastically deformable part whereas in the prior art exclusively relatively hard materials were usually used, in particular with regard to wear resistance. In an extremely surprising manner it has been found that the elastic design of at least one of the surfaces participating in the movement leads to an increased guidance accuracy, which compensates for the wear phenomena that have to date been perceived as an obstacle. A further significant advantage is to be seen in very pleasant haptics. Particularly preferably, the elastic surface should also have a relatively low coefficient of friction, although in principle the lubricants known from the prior art may also be used.

In one preferred embodiment, the at least one at least partially elastic surface is oriented essentially parallel to the relative movement. A parallel orientation may result for example in plane-parallel contact or else favour the interposition of a sliding means such as a bearing element. In one exemplary application of a rotary knob, in this refinement the haptics when rotating the knob may be improved for example in that the knob is acted upon slightly in the axial direction in any manner during actuation, so that the elastic deformation advantageously acts on one surface or between two surfaces extending perpendicular to the axis of rotation.

As an alternative and/or in addition, the at least one at least partially elastic surface may run essentially perpendicular to the relative movement. A perpendicular orientation of the surfaces involved in the movement once again allows simple interposition of a bearing element or of a sliding means. In the preferred application of a rotary knob, the elastic deformability is provided by a radially damped bearing acting on at least one surface extending in a cylindrical manner around the axis of rotation.

The operating element according to the invention may preferably be designed such that the at least two parts are elastically prestressed, in particular so that they act on the at least partially elastic surface. The combination of an elastic surface with a corresponding prestress ensures, on account of the freedom of play that exists, an extremely precise sensitivity for the user during actuation of the operating element, without scratching, scraping or rattling noises occurring.

In one preferred embodiment, locking means are provided in order for example to be able to ensure mutual locking in predefined positions of the at least two parts. A wide range of locking elements may be used, as are familiar to the person skilled in the art from this field of application. Particularly preferably, these locking means at the same time provide the preferred prestress or in one specific application with e.g. spherical bearing elements provide reliable protection against loss.

Preferably, at least one bearing element is provided between the facing surfaces. The kinematics can be considerably improved by providing an intermediate bearing element. By way of example, this may be a type of sliding ring, as a result of which the flat movement which occurs between the two parts is divided into respectively a relative movement with respect to one part and the bearing element and on the other hand the bearing element and the other of the parts.

Particularly preferably, the bearing element comprises one or more rotating bodies, in particular balls. By providing between the two parts rotating bodies which are in engagement with the at least partially elastically deformable surface sections, an elastically damped ball or rolling bearing may be provided for example, as a result of which the ease with which the operating element runs can be further increased, specifically while retaining the abovementioned advantages.

Advantageously, the bearing element comprises uniformly distributed rotating bodies, in particular balls, such as for example three balls offset by 120 degrees, which are particularly preferably accommodated in receiving cut-outs which can maintain their position and provide protection against loss.

It is furthermore preferred that the mutually facing surfaces have at least partial shape complementarity with respect to one another or with respect to the bearing element. By virtue of the corresponding shape complementarity, additional guidance in any direction, that is to say both axially and radially in the case of a rotary knob, can be provided. In the specific preferred application of a rotary knob with balls as the bearing element, correspondingly designed ball tracks may accordingly be provided for example, wherein it is particularly preferred for one of these tracks also to be designed such that it is elastically deformable.

It is furthermore preferred that the at least one at least partially elastic surface comprises a relatively soft plastic injected into a cavity and/or injected onto a surface, in particular an elastomeric plastic. Using the so-called multicomponent injection moulding technique, cost-effective production is thus possible and the structural integrity can be maintained in a particularly simple manner despite the elastic design. Of course, more complex structures are also possible, for example a multilayer structure in which the engagement of the elastic surface with the opposite surface and/or the intermediate bearing element is provided such that a particularly advantageous surface is provided in this respect, below which there is a particularly deformable material. Of course, it is also possible to provide a separate elastically deformable part, for example in the form of an annular track, which is then in engagement with the corresponding one surface and for example can be bonded thereto.

In one preferred embodiment, at least one of the parts is formed of two elements that can be joined together and may encompass the other part. This allows particularly simple assembly, in particular when one of the parts forms part of a dashboard or can be fixed thereto, since in such an application there is usually only a very little amount of available space.

In summary, the invention is thus based on the elastic design of one surface participating in the movement. This may involve any surface geometries, provided to directly interact with the opposite surface or with the interposition of bearing elements or else possibly of a sliding means. Of course, it is also possible for a number of part-sections of an involved surface to be designed to be elastic, or even parts of the mutually facing surfaces, wherein it is also possible for surfaces of the respective parts to be correspondingly designed with a complex geometry.

Further features and advantages of the invention will become clearer upon reading the following description which is given by way of example and in a non-limiting manner, with reference to the appended drawing, in which:
Fig. 1 shows one preferred embodiment of an operating element according to the invention, in schematic part-section.
Fig. 2 shows a second preferred embodiment of an operating element according to the invention, in a view similar to that of Fig. 1.
Fig. 3 shows a schematic part-section of a further embodiment of an operating element according to the invention.
Fig. 4 shows yet another preferred embodiment, in schematic part-section.
Fig. 5 shows yet another preferred embodiment of an operating element according to the invention, with the possibility for dual adjustment.
Fig. 6 shows, in perspective part-section, one particularly preferred embodiment of an operating element according to the invention on a dashboard.

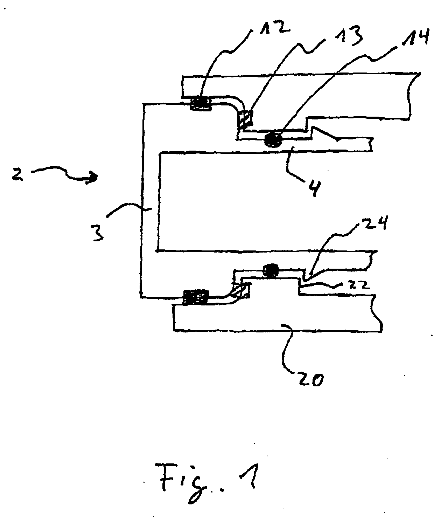

Fig. 1 shows in schematic part-section an operating element as one preferred embodiment of the present invention. The operating element of the embodiment shown here is designed as a rotary knob, although it should be mentioned that slide controls or press switches could also be designed in a corresponding manner. However, the following description of the preferred embodiments for the purpose of illustrating the invention shall relate exclusively to rotary knobs. The operating element comprises, in a conventional manner, a rotary knob that can be actuated by the user, which rotary knob forms the part 2 that is formed of a cover 3 and a shaft 4. In a manner likewise known per se, the part 2 is guided in a part 20 designed as a bushing.

In the embodiment shown, for more concise illustration, provided on three sections of the mutually facing surfaces of the parts 2, 20 are elastic elements as elastic surface configuration, wherein it should be noted that this illustration has been selected merely for the purpose of more concise description. In other words, the disclosure is intended also to encompass corresponding operating elements with only a single elastic surface section. In the example of embodiment shown, between the two parts 2, 20 there are two radially opposite surfaces and one axially opposite surface. Each of these opposite surfaces may according to the invention be elastic at least partially or in some sections, in order to lead to the desired result. Purely by way of example, at reference 12 the inner lateral surface of the cover 3 is designed to be elastic in that a cut-out is formed into which an elastomeric plastic is injected with a rectangular cross section. As can be seen, the injected plastic material protrudes slightly beyond the surface in order to provide elastic sliding friction with respect to the bushing 20.

As an alternative or in addition, it is also possible for one of the involved radial surfaces to be elastic, as shown at reference 13. At reference 13, the surface of the bushing 20 which serves as a stop is provided with a cut-out into which an elastic material, for example an elastomer, is injected. In this case too, the damping shown at reference 12 protrudes slightly so that the part 2 bears against the elastic plastic 13 following insertion and possibly locking by means of the locking means 22, 24.

Again as an alternative or in addition, the elastic surface may also be present in the region of the shaft section 4, as shown by way of example at reference 14. At reference 14, the surface of the shaft 4 is provided with a groove in which an O-ring-like elastic device is embedded. In this development, a small contact width is provided by omitting the shape complementarity.

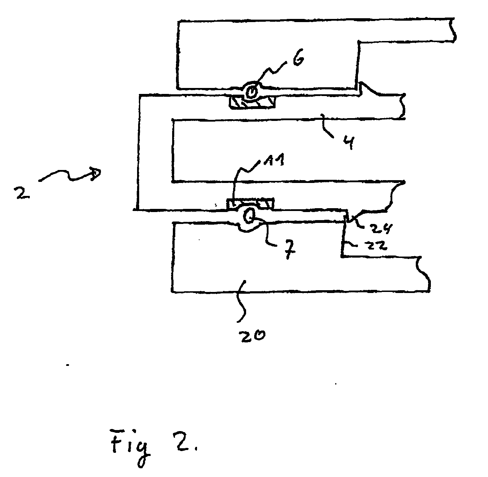

Fig. 2 shows a second preferred embodiment of an operating element according to the invention in schematic part-section. The operating element is once again designed as a rotary knob and for this purpose comprises a rotatable part 2 that can be actuated by the user, said rotatable part being accommodated in a bushing 20. The mutually opposite surfaces between the parts 2, 20 have a predefined spacing and are designed such that corresponding channels are formed for receiving rotating bodies which in the embodiment shown are in the form of balls 6, 7. In the embodiment variant shown here, in the region of the balls 6, 7 the outer surface of the shaft 4, which forms part of part 2, is designed to be elastically deformable in that an elastomeric plastic is injected into a cavity at reference 11. In the embodiment shown here, it is of course possible by means of the assembly to provide a corresponding prestress in that, unlike what is shown, the balls 6, 7 are acted upon under friction by the elastic material 11 against the opposite channel-like surface. The embodiment shown here thus provides a damped radial bearing, wherein it should be noted that of course both surfaces could be designed to be elastically deformable in the region of the balls 6, 7. It should furthermore be noted that, although balls are shown here, other rotational bodies could of course also be used, such as rollers or the like. It is also conceivable to provide an annular sliding element instead of the balls.

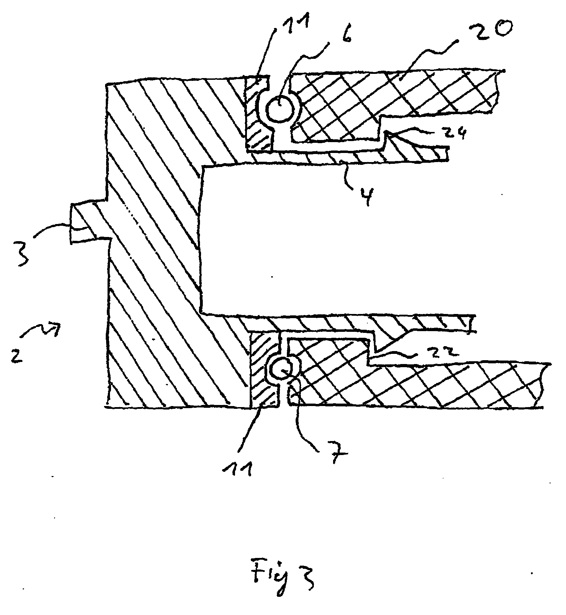

Fig. 3 shows in schematic part-section a further preferred embodiment of an operating element according to the invention, wherein the same references have been used for the same constituents as shown in Fig. 2. For the purpose of more concise illustration, reference will be made only briefly to the constituents that are the same. The operating element of the embodiment shown here is once again to be regarded merely by way of example. A rotary knob which once again is formed of a cover 3 designed as a gripping section for the user, which is part of the first part 2, which furthermore comprises a shaft section 4, which once again is provided with locking projections 24. The part 2 is, as above, inserted into a bushing 20 by means of the shaft 4, wherein the locking projections 24 provide a lock with respect to stop surfaces 22. The parts 2, 20 define with respect to one another in each case facing radial surface sections, at least one of which is designed to be elastically deformable on account of an elastic injected material, as can be seen at reference 11. As can clearly be seen from the illustration in Fig. 3, by virtue of the locking of the two parts 2, 20 a prestress can correspondingly be provided so that the balls 6, 7 are easily pushed into the elastically deformable material 11 so that tolerance compensation is hereby provided and in turn provides comfortable haptics since when a rotary knob is actuated in the conventional manner an axial pushing action is also exerted on the rotary knob itself. In this embodiment too, it should be mentioned that of course the other of the facing surfaces or even both the surfaces could be designed to be elastic.

As in the embodiments described thus far, the operating element of this embodiment is to be suitably installed in a dashboard of a motor vehicle, in order in particular to be able to control a heating, ventilation and/or air conditioning system. By way of example, it could be a temperature or air valve adjustment rotary knob.

The operating element 1 shown in Fig. 3 is essentially composed of four components. The operating element 1 comprises a cover 3 provided with a shaft 4, a bushing 20, a soft component 11 and balls 6, 7.

The balls 6, 7 are guided on the soft component 11, which is shaped on one side as a semicircular shell. The balls 6, 7 are pushed into the shell of the soft component 11 by the cover 3, wherein the locking of the cover 3 with the shaft 4 provides both continuous engagement and also a certain prestress of the engagement, so that the balls 6, 7 are continuously pressed into the elastically deformable material of the shell.

A number of counter-shells (not shown) corresponding to the number of balls 6, 7 may be integrally formed on the non-elastic part adjacent to the balls 6, 7, said counter-shells being designed as ball-shaped shells to correspond to the shape of the balls 6, 7, in order to provide a possibility of distributing the balls 6, 7 at a uniform spacing on the circumference of the cover 3 and in order to provide protection against loss during any disassembly.

A tolerance ring could be formed between the soft component 11 and the cover 3 in order for example to obtain more precise positioning accuracy and increased stability of the operating element.

The tolerance ring could for example be formed of an even softer material than the shell in order to be able to compensate for lower tolerances. In the case of an integral configuration of tolerance ring and shell, a so-called multicomponent injection moulding method may be used to produce and/or apply the soft component 11.

The embodiment variant shown in Fig. 3 would in the corresponding configuration also be particularly advantageously suitable for a slide control which can be moved for example perpendicular to the plane of the drawing, wherein of course the tracks for the balls would have to be dimensioned accordingly in order to be able to ensure the desired mobility for the sliding direction.

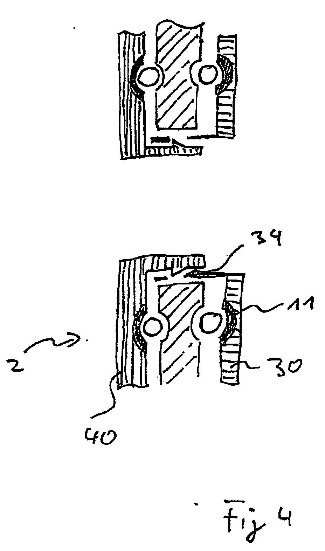

Fig. 4 shows yet another preferred embodiment of an operating element according to the invention as a further development. As in the above-described embodiments, the operating element comprises two parts 2, 20, wherein the part 2, which forms the actuating knob, is composed of two elements 30, 40 that can be locked to one another and engage around the part 20 in a sandwich-like manner. In the embodiment shown, the part 20 may for example be fixedly connected to the dashboard of the motor vehicle, whereas the part 2 to be actuated is an annular rotary knob. In order to encompass the part 20 in a sandwich-like manner, the part 2 is formed of two elements 40, 30 that can be locked to one another and respectively define facing surface sections with respect to the part 20. Once again, as in the previous embodiments, in each case at least one surface section is designed to be elastically deformable in that a soft material is injected in or on, as shown at reference 11.

In the embodiment shown, the elastically deformable surface sections and the opposite non-elastic surface (which may however also be elastic) are profiled in order to define a track for bearing elements so that, as shown, balls 6 and 7 for example can be arranged in an appropriate manner. The embodiment variant shown here thus provides a double-damped ball bearing which provides improved haptics with respect to both axial pulling and axial pushing and allows completely tolerance-free guidance of the part 20 so that any noise production is avoided. By virtue of the lockable configuration in two parts 30, 40 of the rotary knob 2, it is also possible for a corresponding prestress to be provided in a particularly simple and effective manner so that the balls are in each case guided in a prestressed manner in an at least partially elastically deformable track.

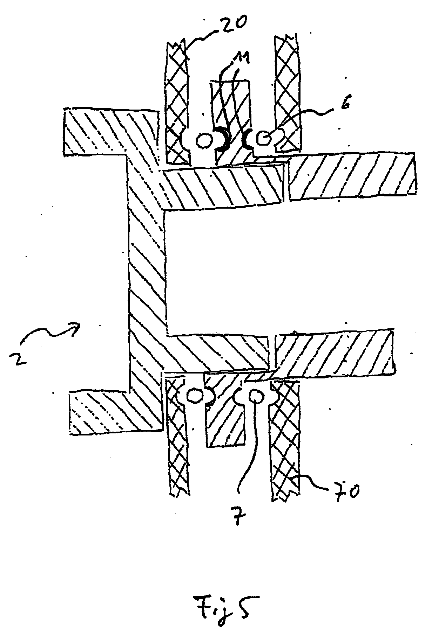

Fig. 5 shows yet another preferred embodiment of an operating element according to the invention. The diagram corresponds essentially to that of Fig. 4, with the same constituents again being provided with the same references. Unlike the embodiment shown in Fig. 4, in this embodiment variant the elastic surface is provided on opposite surfaces of one part, as shown at reference 11, with surfaces opposite thereto being provided in a respectively complementary manner. As in the embodiment shown in Fig. 4, a damped double ball bearing is thus provided, which allows tolerance-free rotation of the rotary knob in a simple manner. As also already indicated in the description with reference to Fig. 3, the person skilled in the art should recognize that a corresponding configuration is also possible for displaceable slide controls.

In the embodiment shown in Fig. 5, it is particularly advantageous that only one constituent has to be produced in the so-called two-component method, whereas the remaining elements may be parts produced by a simple injection moulding technique. In the embodiment variant shown here, the double ball bearing exists on the one hand between the two parts and on the other hand with respect to a dashboard panel which is indicated by reference 7. As above, the part provided with reference 20 is designed such that it can be moved relative to the part 2. In other words, the example of embodiment shown in Fig. 5 allows dual control in that for example the rotary knob 2 itself and the part 20 can be adjusted with respect to the surrounding dashboard 70. The assembly of the operating element shown here is carried out in essentially the same way as for the previous embodiments in that bearing elements, for example in the form of balls, are arranged on the corresponding running surfaces, at least part of which is designed to be elastic. The individual constituents may then be brought into engagement by means of locking elements.

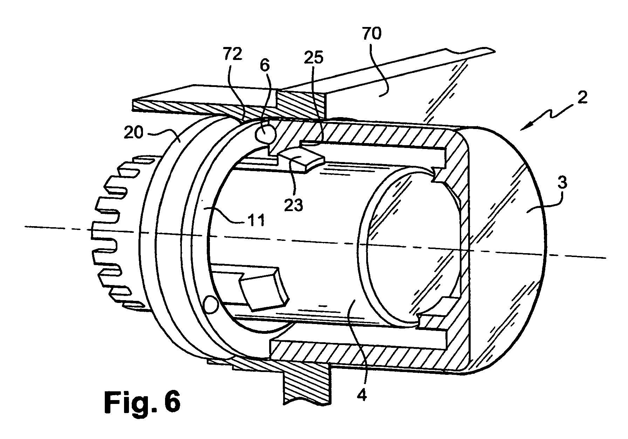

Fig. 6 shows in perspective part-section one particularly preferred embodiment. Constituents which have already been described in the previous embodiments are provided with the same references and are only briefly discussed here for the sake of a more concise illustration. The embodiment shown here is a rotary control located on a dashboard 70. One part 20 is fixed with respect to the dashboard and designed in an annular manner. This part bears an injected-on elastomer ball track 11 as elastic deformation element. The part 2 to be operated is composed of two elements that can be locked 23, 25 to one another, with the fixed part 20 being present as an intermediate element. Between the two parts, three uniformly spaced balls are guided on the elastomer track.

Although not shown, the person skilled in the art should recognize that the respective tracks could also be designed such that the bearing elements, for example in the form of balls, are enclosed to a range of more than 180°, in order thus to provide protection against loss of the balls, as is customary and known in the art of ball or rolling bearings. The person skilled in the art should recognize that individual features of one embodiment can be combined at will with other features of other embodiments, for instance it is possible for example to provide both elastic damping with respect to a direction perpendicular and/or parallel to the movement. In the case of multiple bearings, sliding and/or rolling bearing arrangements may correspondingly be combined. The important thing is ultimately that at least one of two mutually facing surfaces is designed to be elastic in order to be able to serve as a tolerance compensation element and in order to provide the improved haptics.

In summary, it should be noted that the concept according to the invention is based on configuring one part of an operating element with an elastic surface so that it can be deformed by a part guided against said elastic part, in order to provide pleasant haptics and tolerance compensation.

Although the present invention has been fully described above with reference to currently preferred embodiments, the person skilled in the art should recognize that various possibilities for modification are possible within the scope of the attached claims, without departing from the concept of the invention and the claimed protection.

In particular, the person skilled in the art should recognize that other geometries besides a ball or a semicircular shell may be used. By way of example, it is also possible to use rollers with a corresponding configuration of the shell or the like. Moreover, there is the possibility for adaptation to the site of installation and of forming the described shaft of various components that can be assembled together.

## Claims

1. Operating element, in particular for controlling a heating, ventilation and/or air conditioning system in a motor vehicle, which comprises at least two parts (2, 20) which can be moved relative to one another and have mutually facing surfaces, at least one of which is designed to be partially elastic (11; 12; 13; 14).

2. Operating element according to Claim 1, in which the at least one partially elastic surface runs essentially parallel to the relative movement.

3. Operating element according to Claim 1 or 2, in which the at least one at least partially elastic surface runs essentially perpendicular to the relative movement.

4. Operating element according to one of the preceding claims, wherein the at least two parts (2, 20) are prestressed with respect to one another, in particular so that they act on the at least partially elastic surface.

5. Operating element according to one of the preceding claims, in which locking means (23, 24; 24, 34) are provided.

6. Operating element according to one of the preceding claims, in which at least one bearing element (6, 7) is provided between the facing surfaces.

7. Operating element according to Claim 6, in which the bearing element comprises one or more rotating bodies, in particular balls.

8. Operating element according to Claim 7, in which the rotating body or bodies, in particular three balls, are accommodated in receiving cut-outs.

9. Operating element according to one of the preceding claims, in which the facing surfaces have at least partial shape complementarity with respect to one another and/or with respect to the bearing element.

10. Operating element according to Claim 9, when dependent on either of Claims 7 and 8, in which the at least partial shape complementarity provides a track for the rotating body or bodies, in particular an elastically deformable track.

11. Operating element according to one of the preceding claims, wherein the at least one at least partially elastic surface comprises a relatively soft plastic injected into a cavity and/or injected onto a surface, in particular an elastomeric plastic.

12. Operating element according to one of the preceding claims, in which one of the parts (2, 20) consisting of two elements that can be joined together encompasses the other part as an intermediate element.

13. Operating element according to one of the preceding claims, in which one of the parts (2, 20) forms part of a dashboard or can be fixed thereto.
